# EUROPEAN PATENT SPECIFICATION

(11) **EP 1 425 558 B1**
(45) Date of publication and mention of the grant of the patent: **19.04.2017**
(21) Application number: 02775617.0
(22) Date of filing: 13.09.2002
(51) Int. Cl.: G01S 7/03, G01F 23/284, G01S 13/08

(54) **ANTENNA FEEDER IN A LEVEL MEASURING GAUGING SYSTEM**
ANTENNENSPEISUNG IN EINEM PEGELMESS-ANZEIGESYSTEM
FEEDER D'ANTENNE DE SYSTEME DE CALIBRAGE A MESURE DE NIVEAU

(30) Priority: 14.09.2001 SE 0103078
(43) Date of publication of application: 09.06.2004
(73) Proprietor: Rosemount Tank Radar AB, 435 23 Mölnlycke (SE)
(72) Inventor: KLEMAN, Mikael, S-590 61 Vreta Kloster (SE); WESTERLING, Jan, S-587 31 Linköping (SE)
(74) Representative: Awapatent AB
(86) International application number: PCT/SE2002/001662
(87) International publication number: WO 2003/025523

(56) References cited:
- WO-A1-01/02818
- US-A- 4 853 650
- US-B1- 6 242 984

## Description

### TECHNICAL FIELD

The present invention relates to a radar level gauging system including a device for feeding microwave signals from different microwave channels to one antenna unit.

The invention further shows a method for achieving said feeding.

### BACKGROUND OF THE INVENTION

There is known in the art to measure the level of the surface of a medium stored in a tank by means of a radar level gauge. Such a device is disclosed in the document US 4 665 403. When measuring the level of the medium in a tank, there are requirements that the level must be supervised to fulfil security restrictions. Hence, as an example, one or two independent overfill alarms must be installed. The user further may want redundancy in measured values which may require more than one installed measurement system, which may require at least two complete independent level gauges.

The published publication PCT/SE00/01291 (D1) (WO-A-01/02812) discloses a device and a method for measuring the level of the surface of a medium in a tank, where more than one radar channel is used for obtaining a measured value of said level, where the level values measured in said channels are obtained independently of each other. This is accomplished by use of at least two microwave signals distributed in separate channels fed to the same antenna unit, whereby the at least two signals are used to measure the level independently of each other. Said microwave signals are distinguished by means of a detectable characteristic.

Due to safety restrictions to fulfil safety and environmental laws and requirements, there is a need for each measurement of the surface level of the medium in the tank to be completely separated from each other. It is necessary to use two or more independent measurement instruments in order to make it possible to have the measurements regarded as fail safe.

The purpose of this invention is to show that a fail safe system is accomplished by use of the radar level gauge as disclosed in D1 and modified according to the invention.

### BRIEF DESCRIPTION OF THE INVENTION

One aspect of the invention is to present a system with the features of the independent system claim.

A second aspect of the invention is to present a method according to the independent method claim.

By use of the device and the method as stated in the claims it will be possible to arrange for the separate radar measuring channels to be functionally independent to provide independent or redundant level gauging. The arrangement of the feeding means provides a cost-efficient and effective solution for attaining the functional independence.

By use of the device and the method as stated in the claims it will further be possible to arrange for the microwave signals distributed in separate radar measuring channels to be galvanically isolated from each other. Wave guides are electrically conducting. Thus, normally, when two or more microwave signals distributed in a coaxial line to a wave guide, said wave guide will shortcircuit the exterior conductors of said coaxial lines (cables), whereby the channel distributing a certain first microwave signal is not completely galvanically independent and separated from another channel distributing a second microwave signal. A channel is here characterized as all the electronics, including microwave transmitter and receiver, that is needed to generate, transmit, distribute and receive said first or second microwave signal up to the microwave waveguide. The microwave signals used in the inventions aspects are distinguishable. This may be arranged by generating microwave signals for the different channels to have, for example, different polarization, different modulation, different frequencies or time of occurence.

An important task in use of two or more microwave signals originating from different microwave channels when using the same antenna hardware is to find a proper component, here called a combiner, which can receive the electrical signals, that is in this case, the microwave signals distributed to the component by means of some kind of transmission lines, such as coaxial cables, and to convert these signals to microwaves for distribution in a wave guide means to the antenna means. By use of the device and method as defined in the claims this task is fulfilled. It is possible with the device described to receive incoming microwave signals from different cables, to transfer the electrical signals into waves and to keep the channels delivering the separate microwave signals galvanically isolated from each other.

An important purpose arrived at with the aspects of the invention is that it will be possible to use only one radar instrument installation for all the measurements needed to have full control of the level of the surface of a medium in a tank. The radar instrument can be provided with two or more microwave channels, distributing microwave signals to the combiner and delivering microwaves to the one and only antenna hardware. As the channels are galvanically independant and are possible to make galvanically separated from each other it will thus be possible to fulfill various authority requirements for fail safe measurements, which in turn means that redundant measurement devices will be superfluous and separately installed overfill alarms are not necessary. By using essentially the same antenna hardware for two or more anntenna functions there is a need for only one opening in the tank roof, at least for level measuring purposes and still have independent measuring function in two or more channels. Using one hardware containing two or more antenna functions is no limitation of the possibilities of level measuring by use of more than two channels, as the antenna hardware is a mechanical device and out of all practical reasons fail safe. Any deterioration of the antenna function, by for example contamination on the antenna from the medium in the tank, will be detected by the instrument and cause an alarm condition.

The term galvanically is used as it is commonly interpreted, whereby it is indicated that two objects galvanically isolated from each other are separated in DC terms.

### BRIEF DESCRIPTION OF THE DRAWINGS

Figure 1 shows a microwave level measurement instrument, which has three radar channels and a combiner for feeding an antenna.
Figure 2 shows the electronics of one radar channel and a combiner separated in space and the bottom part of a housing.
Figure 3 shows a combiner for use as an example of a device as defined in the claims.
Figure 4 shows the combiner of fig. 3 in a perspective view from another angle.

### EMBODIMENTS OF THE INVENTION

A number of embodiments will be described below with support of the enclosed figures.

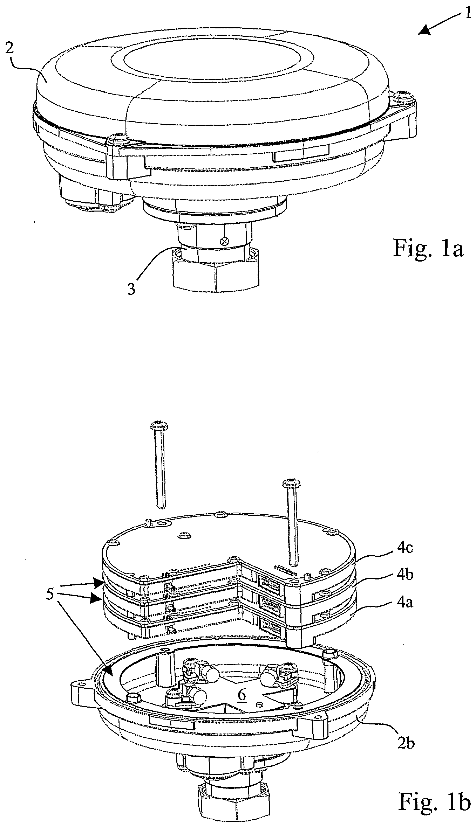

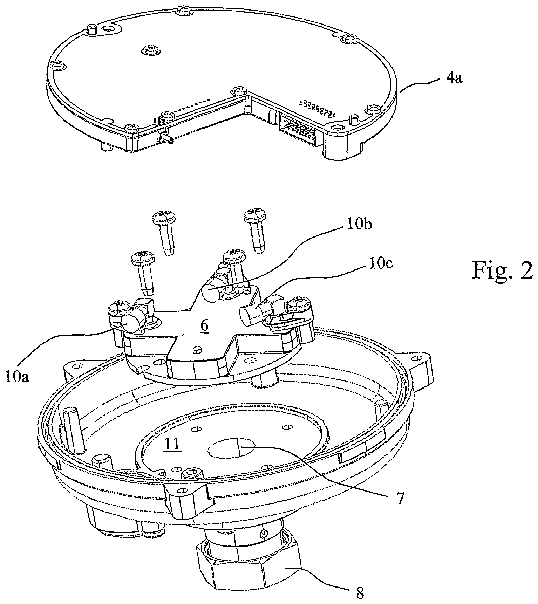

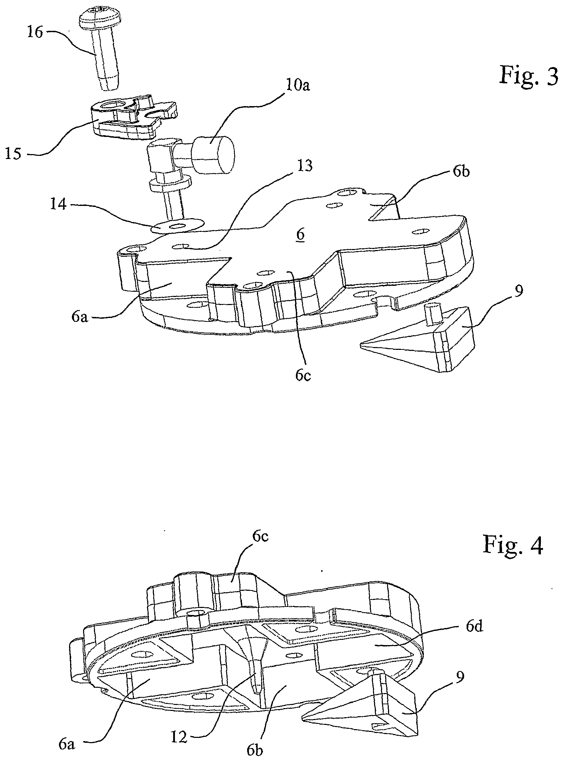

The housing 2 of a complete radar level measuring gauge 1 is shown in figure 1a. Said housing can be made of a metal alloy, plastics or another appropriate material for a housing. The microwaves generated by the transmitters of the radar channels in the gauge are output through the wave guide output 3. In figure 1b the top part of the housing is removed, leaving only the housing bottom part 2b visable. In the interior of the housing there is illustrated, as in this example, the electronic circuit boards for three different radar level measuring channels 4a, 4b, 4c mounted on top of each other. These circuits are electrically separated and isolated from each other by means of electrical isolation sheets 5 embedded in between each radar channel circuit board 4a, 4b, 4c and between the lowest circuit board 4a and the housing 2. The isolation sheets may be omitted. Inside the housing bottom part 2b, there is shown the combiner 6. The combiner 6 is located at the bottom of the housing for receiving the microwave signals from the radar channels 4a, 4b, 4c and for outputting the microwave signals as waves through an antenna feeding waveguide 7, by which the antenna (not shown) is fed. This is illustrated in figure 2. A fastening means 8 for the antenna, such as a horn antenna is also shown. The combiner shown in the drawings is a so called turnstile junction having known isolation properties (cf. A. F. Harwey: "Microwave Engineering", Academic Press 1966, especially pages 119-120) and the combiner 6 in the shown example has three connections for three different radar channels. The connections are shown as coaxial connectors 10a, 10b, 10c. Each connector is mounted on a wave guide member 6a, 6b, 6c, which each of them has an opening to one side and united with each other at this one side, such that the wave guide members 6a, 6b, 6c has a common outlet, in this case formed by the antenna feeding waveguide 7. The opposite side of each wave guide member channel is closed. The combiner is aimed to be mounted on to a flat designed surface 11 at the bottom of the housing 2, whereby said flat surface 11 forms the forth wall of each wave guide member channel. The interior of the wave guide members are shown in figure 4. It is here illustrated four wave guide members 6a, 6b, 6c, 6d which all have rectangular cross section, where it is shown that all four wave guides opens into a common space, in the centre of which there is arranged a cone 12 for impedance matching between the waveguide members 6a, 6b, 6c, 6d and for achieving the desired characteristic insulation properties. As in the described example the fourth wave guide member 6d is not used. It is filled with a suitably shaped waveguide terminator 9 of a microwave absorbing material. In figure 4 it, it can be seen that the wave guide members have three walls in the dismantable part of the combiner 6. The fourth wall of the rectangular wave guide is added when the combiner 6 is mounted and fixed against the flat surface 11.

The microwave signals are provided to the combiner 6 be means of probes, such as the one depicted in figure 3. The probe is arranged as a coaxial connector 10a, where each channel is provided with such a connector. Said connector forwards the microwave signal from one of the radar channels and introduces the signal into the combiner 6 at wave guide member 6a by means of a centre cable signal part of the connector 10a, where said centre part is entered into the wave guide member 6a through the opening 13, whereby the microwave is transferred to wave form inside the wave guide 6a. As the coaxial cable providing the signal to the connector 10a is equpped with a shield, used as a so called signal earth, there is according to the aspect of the invention provided an electrical isolation between this signal earth and the casting of the combiner 6. This electrical isolation is arranged by use of an electrical isolation washer 14. The washer 14 is made of mica. As the connector 10a is electrically isolated from the casting and thus can not be fastened directly to the casting, the connector is kept at place by means of a clamp device 15. This clamp device is made of an electrical isolating material, such as a plastic material. The clamp is fixed to the combiner 6 by means of a fastening device 16, such as a screw, a rivet or an equivalence. The clamp 15 is embracing a socket of the connector, whereby the connector is held firmly at place.

The connection of the other radar channel microwave signals to the combiner 6 are made in an equivalent way as described.

As can be deduced by anyone skilled in the art, parts of the invention can be made in different ways and still fulfil the same function. The combiner of the type described above can be substituted by any other microwave hybrid component having similar function and especially insulation properties between some of the microwave channels. The coaxial cables can be made of other standard microwave transmission lines, such as printed coplanar waveguides. Corresponding alternative ways to apply the galvanic isolation exist.

## Claims

1. A radar level gauging system, including a device arranged to feed at least two distinguishable microwave signals to one and the same antenna unit, wherein each of said microwave signals is distributed by means of respective signal guides in the form of transmission lines via channels being functionally independent of each other, **characterized in that** the device comprises a feeding means (6) having:
- at least two wave guide members (6a, 6b, 6c); each one of said wave guide members receiving one of said microwave signals via a respective one of said signal guides for forwarding the microwave signal to the wave guide member (6a, 6b, 6c) and
- one wave guide outlet (7) common to said wave guide members (6a, 6b, 6c), wherein said wave guide outlet (7) is located at a wave guide member interconnection for feeding said antenna unit with said distinguishable microwaves from said outlet (7),
wherein said wave guide members and said wave guide outlet are constituted by a turnstile junction arranged to provide functional independence of said channels, and
wherein at least one of said transmission lines is galvanically insulated from its respective wave guide member.

2. System according to claim 1, wherein there is a microwave signal isolation between at least two of the wave guide members (6a, 6b, 6c).

3. System according to claim 2, wherein said wave guide members and said wave guide outlet are arranged to provide functional independence of said channels by means of said microwave signal isolation.

4. System according to any of claims 1-3, wherein all signal guide parts are galvanically insulated from the respective wave guide member (6a, 6b, 6c).

5. System according to any of claims 1-4, wherein the microwave signals in the different channels are distuingishable by means of different polarization of the signal for each channel.

6. System according to any of claims 1-5, wherein the microwave signals in the different channels are distuingishable by means of different modulation of the signal for each channel.

7. System according to any of claims 1-6, wherein the microwave signals in the different channels are distuingishable by means of different frequency of the signal for each channel.

8. System according to any of claims 1-7, wherein the microwave signals in the different channels are distuingishable by means of the signal for each channel being separated in time.

9. System according to any of claims 1-8, wherein at least two wave guide members (6a, 6b, 6c) are arranged orthogonally in relation to each other.

10. System according to any of claims 1-9, wherein the outlet (7) is arranged orthogonally in relation to the wave guide members (6a, 6b, 6c).

11. System according to any claims 1-10, wherein the outlet (7) is formed as a wave guide, which is directly coupled to the antenna unit.

12. System according to any of claims 1-11, wherein the microwave signals are fed to the feeding means (6) by means of coaxial lines and connected to the guide wave members by means of coaxial connectors (10a, 10b, 10c).

13. System according to any of claims 1-12, wherein the signal guides distributing the microwave signals to said feeding means (6) are galvanically insulated from the respective wave guide member (6a, 6b, 6c) by means of a galvanically insulating washer (14).

14. System according to claim 13, wherein the washer (14) is a mica washer.

15. System according to any of claims 12-14, wherein the connectors are held in place by means of nonconductive clamps (15).

16. System according to claim 1, wherein said wave guide members have an interior and a rectangular cross section.

17. System according to claim 1, wherein a cone (12) is arranged in the wave guide member interconnection for impedance matching between the wave guide members and for achieving the desired insulation properties.

18. System according to claim 1, wherein there is a non-used fourth wave guide member (6d) filled with a wave guide terminator (9) of a microwave absorbing material.

19. Method, in a radar level gauging system, for feeding at least two distinguishable microwave signals, distributed in separated channels, to the same antenna hardware, comprising the steps of:
- providing a wave guide member (6a, 6b, 6c) for each microwave signal,
- forwarding each microwave signal to an associated wave guide member (6a, 6b, 6c) by means of a signal guide associated with said signal, wherein the signal guide is in the form of a transmission line,
- galvanically insulating all parts of said signal guide from said associated wave guide member (6a, 6b, 6c) and
- transmitting to the antenna hardware the signal from each wave guide member (6a, 6b, 6c) via an outlet (7) common for all wave guide members, wherein said wave guide members and said outlet are constituted by a turnstile junction arranged to provide functional independence of said channels.

20. Method according to claim 19, comprising the step of galvanically insulating said channels from one another.

## Patentansprüche

1. Radar-Füllstandsanzeigesystem, das eine Vorrichtung aufweist, die dazu angeordnet ist, mindestens zwei unterscheidbare Mikrowellensignale in ein und dieselbe Antenneneinheit einzuspeisen,
wobei jedes der Mikrowellensignale mithilfe entsprechender Signalleiter in Form von Übertragungsleitungen über Kanäle verteilt wird, die funktionell voneinander unabhängig sind, **dadurch gekennzeichnet, dass** die Vorrichtung ein Einspeisemittel (6) umfasst, das aufweist:
- mindestens zwei Wellenleiterelemente (6a, 6b, 6c), wobei jedes der Wellenleiterelemente über einen entsprechenden der Signalleiter zum Weiterleiten des Mikrowellensignals zu dem Wellenleiterelement (6a, 6b, 6c) eines der Mikrowellensignale empfängt, und
- einen Wellenleiterausgang (7), der den Wellenleiterelementen (6a, 6b, 6c) gemeinsam ist, wobei der Wellenleiterausgang (7) sich an einer Wellenleiterelementzusammenschaltung befindet, zum Einspeisen der unterscheidbaren Mikrowellen aus dem Ausgang (7) in die Antenneneinheit,
wobei die Wellenleiterelemente und der Wellenleiterausgang durch eine Drehkreuzverbindung ausgebildet sind, die dazu angeordnet ist, für eine funktionelle Unabhängigkeit der Kanäle zu sorgen, und
wobei mindestens eine der Übertragungsleitungen von ihrem entsprechenden Wellenleiterelement galvanisch isoliert ist.

2. System nach Anspruch 1, wobei zwischen mindestens zweien der Wellenleiterelemente (6a, 6b, 6c) eine Mikrowellensignalisolierung vorhanden ist.

3. System nach Anspruch 2, wobei die Wellenleiterelemente und der Wellenleiterausgang dazu angeordnet sind, mithilfe der Mikrowellensignalisolierung für eine funktionelle Unabhängigkeit der Kanäle zu sorgen.

4. System nach einem der Ansprüche 1 - 3, wobei alle Signalleiterteile von dem entsprechenden Wellenleiterelement (6a, 6b, 6c) galvanisch isoliert sind.

5. System nach einem der Ansprüche 1 - 4, wobei die Mikrowellensignale in den unterschiedlichen Kanälen mithilfe einer unterschiedlichen Polarisation des Signals für jeden Kanal unterscheidbar sind.

6. System nach einem der Ansprüche 1 - 5, wobei die Mikrowellensignale in den unterschiedlichen Kanälen mithilfe einer unterschiedlichen Modulation des Signals für jeden Kanal unterscheidbar sind.

7. System nach einem der Ansprüche 1 - 6, wobei die Mikrowellensignale in den unterschiedlichen Kanälen mithilfe einer unterschiedlichen Frequenz des Signals für jeden Kanal unterscheidbar sind.

8. System nach einem der Ansprüche 1 - 7, wobei die Mikrowellensignale in den unterschiedlichen Kanälen dadurch unterscheidbar sind, dass das Signal für jeden Kanal zeitlich getrennt ist.

9. System nach einem der Ansprüche 1 - 8, wobei mindestens zwei Wellenleiterelemente (6a, 6b, 6c) rechtwinklig zueinander angeordnet sind.

10. System nach einem der Ansprüche 1 - 9, wobei der Ausgang (7) rechtwinklig zu den Wellenleiterelementen (6a, 6b, 6c) angeordnet ist.

11. System nach einem der Ansprüche 1 - 10, wobei der Ausgang (7) als ein Wellenleiter ausgebildet ist, der direkt mit der Antenneneinheit gekoppelt ist.

12. System nach einem der Ansprüche 1 - 11, wobei die Mikrowellensignale mithilfe von Koaxialleitungen in das Einspeisemittel (6) eingespeist werden und mithilfe von Koaxialverbindungselementen (10a, 10b, 10c) mit den Leiterwellenelementen verbunden sind.

13. System nach einem der Ansprüche 1 - 12, wobei die Signalleiter, welche die Mikrowellensignale zu dem Einspeisemittel (6) verteilen, mithilfe einer galvanisch isolierenden Unterlegscheibe (14) von dem entsprechenden Wellenleiterelement (6a, 6b, 6c) galvanisch isoliert sind.

14. System nach Anspruch 13, wobei die Unterlegscheibe (14) eine Glimmer-Unterlegscheibe ist.

15. System nach einem der Ansprüche 12 - 14, wobei die Verbindungselemente mithilfe nicht leitfähiger Klemmen (15) in Position gehalten werden.

16. System nach Anspruch 1, wobei die Wellenleiterelemente einen Innenraum und einen rechteckigen Querschnitt aufweisen.

17. System nach Anspruch 1, wobei zur Impedanzanpassung zwischen den Wellenleiterelementen und zum Erreichen der gewünschten Isoliereigenschaften ein Kegel (12) in der Wellenleiterelementzusammenschaltung angeordnet ist.

18. System nach Anspruch 1, wobei ein nicht verwendetes viertes Wellenleiterelement (6d) vorhanden ist, das mit einem Wellenleiterabschluss (9) aus einem Mikrowellen absorbierenden Material gefüllt ist.

19. Verfahren in einem Radar-Füllstandsanzeigesystem zum Einspeisen von mindestens zwei unterscheidbaren Mikrowellensignalen, die in getrennten Kanälen übertragen werden, in dieselbe Antennenhardware, das folgende Schritte umfasst:
- Bereitstellen eines Wellenleiterelements (6a, 6b, 6c) für jedes Mikrowellensignal,
- Weiterleiten jedes Mikrowellensignals zu einem zugeordneten Wellenleiterelement (6a, 6b, 6c) mithilfe eines Signalleiters, der dem Signal zugeordnet ist, wobei der Signalleiter in Form einer Übertragungsleitung vorliegt,
- galvanisches Isolieren aller Teile des Signalleiters von dem zugeordneten Wellenleiterelement (6a, 6b, 6c) und
- Übertragen des Signals von jedem Wellenleiterelement (6a, 6b, 6c) zu der Antennenhardware über einen Ausgang (7), der allen Wellenleiterelementen gemeinsam ist, wobei die Wellenleiterelemente und der Ausgang durch eine Drehkreuzverbindung ausgebildet sind, die dazu angeordnet ist, für eine funktionelle Unabhängigkeit der Kanäle zu sorgen.

20. Verfahren nach Anspruch 19, das den Schritt eines galvanischen Isolierens der Kanäle voneinander umfasst.

## Revendications

1. Système de mesure de niveau à radar, comprenant un dispositif disposé de manière à fournir au moins deux signaux micro-ondes distincts à une seule et même antenne,
dans lequel chacun desdits signaux micro-ondes est distribué à l'aide de guides de signal respectifs sous la forme de lignes de transmission par le biais de canaux fonctionnellement indépendants les uns des autres, **caractérisé en ce que** le dispositif comprend un moyen d'alimentation (6) comprenant :
- au moins deux éléments guides d'ondes (6a, 6b, 6c) ; chacun de l'un desdits éléments guides d'ondes recevant l'un desdits signaux micro-ondes par le biais de l'un respectif desdits guides de signal pour transmettre le signal micro-onde à l'élément guide d'ondes (6a, 6b, 6c), et
- une sortie de guide d'ondes (7) commune auxdits éléments guides d'ondes (6a, 6b, 6c), ladite sortie de guide d'ondes (7) étant située à une interconnexion d'éléments guides d'ondes pour fournir lesdits signaux micro-ondes distincts à ladite unité d'antenne à partir de ladite sortie (7),
dans lequel lesdits éléments guides d'ondes et ladite sortie de guide d'ondes sont formés par une jonction en tourniquet conçue pour fournir une indépendance fonctionnelle auxdits canaux, et
dans lequel au moins l'une des lignes de transmission est isolée de façon galvanique de son élément guide d'ondes respectif.

2. Système selon la revendication 1, dans lequel il est prévu une isolation de signaux micro-ondes entre au moins deux des éléments guides d'ondes (6a, 6b, 6c).

3. Système selon la revendication 2, dans lequel lesdits éléments guides d'ondes et ladite sortie de guide d'ondes sont conçus pour fournir une indépendance fonctionnelle auxdits canaux à l'aide de ladite isolation de signaux micro-ondes.

4. Système selon l'une quelconque des revendications 1 - 3, dans lequel toutes les parties de guide de signal sont isolées de façon galvanique de leur élément guide d'ondes (6a, 6b, 6c) respectif.

5. Système selon l'une quelconque des revendications 1 - 4, dans lequel les signaux micro-ondes dans les différents canaux sont distinguables à l'aide d'une polarisation différente du signal pour chaque canal.

6. Système selon l'une quelconque des revendications 1 - 5, dans lequel les signaux micro-ondes dans les différents canaux sont distinguables à l'aide d'une modulation différente du signal pour chaque canal.

7. Système selon l'une quelconque des revendications 1 - 6, dans lequel les signaux micro-ondes dans les différents canaux sont distinguables à l'aide d'une fréquence différente du signal pour chaque canal.

8. Système selon l'une quelconque des revendications 1 - 7, dans lequel les signaux micro-ondes dans les différents canaux sont distinguables à l'aide d'une séparation temporelle du signal pour chaque canal.

9. Système selon l'une quelconque des revendications 1 - 8, dans lequel au moins deux éléments guides d'ondes (6a, 6b, 6c) sont disposés orthogonalement les uns par aux autres.

10. Système selon l'une quelconque des revendications 1 - 9, dans lequel la sortie (7) est disposée orthogonalement par rapport aux éléments guides d'ondes (6a, 6b, 6c).

11. Système selon l'une quelconque des revendications 1 - 10, dans lequel la sortie (7) est formée comme un guide d'ondes directement couplé à l'unité d'antenne.

12. Système selon l'une quelconque des revendications 1 - 11, dans lequel les signaux micro-ondes sont fournis au moyen d'alimentation (6) à l'aide de lignes coaxiales et reliés aux éléments guides d'ondes à l'aide de connecteurs coaxiaux (10a, 10b, 10c).

13. Système selon l'une quelconque des revendications 1 - 12, dans lequel les guides de signal distribuant les signaux micro-ondes audit moyen d'alimentation (6) sont isolés de façon galvanique de l'élément guide d'ondes (6a, 6b, 6c) respectif à l'aide d'une rondelle (14) d'isolation galvanique.

14. Système selon la revendication 13, dans lequel la rondelle (14) est une rondelle en mica.

15. Système selon l'une quelconque des revendications 12 - 14, dans lequel les connecteurs sont maintenus en place à l'aide de pinces non-conductrices (15).

16. Système selon la revendication 1, dans lequel lesdits éléments guides d'ondes présentent un intérieur et une section transversale rectangulaire.

17. Système selon la revendication 1, dans lequel un cône (12) est disposé dans l'interconnexion d'éléments guides d'ondes pour la concordance d'impédance entre les éléments guides d'ondes et pour atteindre les propriétés isolantes souhaitées.

18. Système selon la revendication 1, dans lequel il est prévu un quatrième élément guide d'ondes non-utilisé (6d) rempli avec une terminaison de guide d'ondes (9) constituée d'un matériau absorbant les microondes.

19. Procédé, dans un système de mesure de niveau à radar, destiné à fournir au moins deux signaux micro-ondes distincts, distribués dans des canaux séparés, à un même matériel d'antenne, comprenant les étapes suivantes :
- mise à disposition d'un élément guide d'ondes (6a, 6b, 6c) pour chaque signal micro-onde,
- transmission de chaque signal micro-onde à un élément guide d'ondes (6a, 6b, 6c) associé à l'aide d'un guide de signal associé audit signal, le guide de signal étant fourni sous la forme d'une ligne de transmission,
- isolation galvanique de toutes les parties dudit guide de signal par rapport audit élément guide d'ondes (6a, 6b, 6c) associé,
- transmission du signal au matériel d'antenne à partir de chaque élément guide d'ondes (6a, 6b, 6c) par le biais d'une sortie (7) commune pour tous les éléments guides d'ondes, lesdits éléments guides d'ondes et ladite sortie étant formés par une jonction en tourniquet conçue pour fournir une indépendance fonctionnelle auxdits canaux.

20. Procédé selon la revendication 19, comprenant l'étape d'isolation galvanique desdits canaux les uns par rapport aux autres.
